Europäisches Patentamt

European Patent Office

Office européen des brevets

(11) Numéro de publication: **0 119 880**
**A1**

(12) # DEMANDE DE BREVET EUROPEEN

(21) Numéro de dépôt: **84400263.4**

(22) Date de dépôt: **08.02.84**

(51) Int. Cl.³: **B 60 T 13/24**

(30) Priorité: **16.02.83 FR 8302496**

(43) Date de publication de la demande: **26.09.84**
**Bulletin 84/39**

(84) Etats contractants désignés: **DE GB IT NL SE**

(71) Demandeur: **SOCIETE ANONYME D.B.A., Centre Paris Pleyel, F-93521 St-Denis Cédex 01 (FR)**

(72) Inventeur: **Morin, Gérard, 159 rue Pasteur, F-77 Condé Sainte Libiaire (FR)**

(74) Mandataire: Le Moenner, Gabriel et al, **SERVICE BREVETS BENDIX 44, Rue François 1er, F-75008 Paris (FR)**

(54) Procédé de montage d'un ensemble d'un servomoteur d'assistance au freinage et d'un maître cylindre sur une paroi fixe, et servomoteur pour la mise en oeuvre de ce procédé.

(57) Le procédé de montage d'un ensemble d'un servomoteur d'assistance (1) et d'un maître cylindre (15) en porte-à-faux sur une paroi fixe (50) d'un véhicule, au moyen d'au moins un élément transmetteur d'effort sensiblement rectiligne (30) reliant directement le maître cylindre (15) à la paroi fixe (50), comprend l'étape de solidariser préalablement sur la face opposée de la paroi (50) un organe de fixation (34) et d'assembler et fixer en place l'ensemble par manoeuvre de la tête (32) de l'élément transmetteur d'effort, lequel est avantageusement disposé dans un tube d'entretoisement (27) de même extension axiale que le boîtier de servomoteur et connecté à ce dernier, l'ensemble des opérations s'effectuant ainsi d'un seul et même côté de la paroi fixe (50).

PROCEDE DE MONTAGE D'UN ENSEMBLE D'UN SERVOMOTEUR
D'ASSISTANCE AU FREINAGE ET D'UN MAITRE-CYLINDRE
SUR UNE PAROI FIXE D'UN VEHICULE, ET SERVOMOTEUR
POUR LA MISE EN OEUVRE DE CE PROCEDE.

La présente invention concerne les ensembles d'assistances
au freinage pour véhicules automobiles, comprenant un maître-cylindre
et un servomoteur d'assistance, plus particulièrement du type à dépression,
montés en porte-à-faux sur une face d'une paroi fixe du véhicule, avec
le servomoteur intercalé entre le maître-cylindre et cette paroi fixe,
le servomoteur comprenant un boîtier divisé intérieurement par une
structure de paroi mobile en une première et une seconde chambres,
au moins un élément transmetteur de force sensiblement rectiligne
s'étendant axialement dans une zone intérieure au profil général circonscrit du boîtier et présentant des première et seconde extrémités
faisant respectivement saillie axialement de part et d'autre du boîtier
de servomoteur, au moins la première extrémité de l'élément transmetteur
de force étant agencé de façon à coopérer avec un organe de fixation
complémentaire pour l'assemblage de l'ensemble et son montage sur la paroi
fixe du véhicule, et, plus particulièrement, un procédé d'un tel ensemble
sur cette paroi fixe.

Des ensembles de freinage de ce type sont décrits par exemple
dans les documents suivants : le brevet britannique GB-B-2 009 871, qui
concerne un servomoteur avec des tirants s'étendant à l'intérieur des
chambres du boîtier, au travers de la structure de paroi mobile ; les
demandes de brevet britanniques GB-A-2 070 171 et GB-A-2 082 704, qui
concernent des tirants s'étendant à l'extérieur de la paroi du boîtier
mais dans une zone en retrait à l'intérieur du profil général circonscrit
du boîtier ; la demande de brevet européen EP-A-0 052 472, qui concerne
une technique voisine de celle des deux documents précédents mais avec
les tirants s'étendant dans l'épaisseur de la paroi du boîtier au niveau
des zones en retrait de celui-ci ; ou encore dans la demande de brevet
français N° 82-18184 au nom de la demanderesse, qui concerne une structure
de servomoteur avec une zone centrale neutre dans laquelle s'étendent
les tirants traversant la partie de moyeu centrale abritant le moyen de
valve du servomoteur.

Dans ces divers documents, les tirants ou éléments transmetteur
de force ont leur première extrémité traversant la paroi fixe du véhicule solidarisée à cette dernière par un écrou qui doit donc être vissé du côté intérieur de la paroi fixe (c'est-à-dire en général dans l'habitacle) alors que l'assemblage de l'ensemble s'effectue de l'autre côté de la paroi fixe, c'est-à-dire dans le compartiment moteur du véhicule, de la même manière que dans les techniques classiques avec des vis solidaires des parois opposées du servomoteur, avec les difficultés afférentes bien connues pour l'opérateur qui ne peut à la fois être à l'intérieur et à l'extérieur de l'habitacle du véhicule, l'accès à la zone de fixation de l'ensemble, côté habitacle, étant de plus extrêmement malaisé.

La présente invention a précisément pour objet d'obvier à ces inconvénients en proposant un procédé de montage en porte-à-faux d'un tel ensemble de freinage facilitant grandement les opérations de montage et de démontage et permettant notamment à l'opérateur de réaliser toutes les opérations de montage (ou de démontage) en demeurant du seul côté de la paroi fixe du véhicule où est installé l'ensemble de freinage.

Pour ce faire, selon une caractéristique de l'invention, le procédé comprend les étapes de solidariser préalablement sur l'autre face de la paroi fixe du véhicule l'organe de fixation complémentaire ou la seconde extrémité de l'élément transmetteur de force, d'assembler l'ensemble du servomoteur et du maître cylindre et de le fixer en place par manoeuvre de la première extrémité de l'élément transmetteur de force ou de l'organe de fixation, respectivement, du côté du servomoteur opposé à la paroi fixe.

La présente invention concerne également un agencement de servomoteur d'assistance pour la mise en oeuvre de ce procédé et conçu de façon à permettre une mise en place aisée et fiable des éléments transmetteurs de force vis-à-vis du boîtier de servomoteur et pour assurer, lors de l'opération d'assemblage, la réaction de l'effort de serrage entre l'élément transmetteur de force et l'organe de fixation complémentaire.

Pour ce faire, selon une autre caractéristique de l'invention, le servomoteur d'assistance comprend en outre un moyen d'entretoisement tubulaire disposé dans ladite zone intérieure du boîtier, connecté au boîtier et de même extension axiale que ce dernier, et formant moyen de guidage et de logement pour l'élément transmetteur de force.

De façon plus spécifique, le moyen d'entretoisement tubulaire est constitué par un tube s'étendant à l'intérieur du boîtier.

Selon une caractéristique plus particulière de l'invention, le servomoteur d'assistance, conformément à la demande de brevet français N° 82-18184 sus-mentionnée, comprend une partie de moyeu centrale solidaire en déplacement de la structure de paroi mobile et dans laquelle est disposé un moyen de valve de commande actionné par un organe d'entrée, chaque chambre du boîter étant délimitée intérieurement par une paroi souple s'étendant entre la partie de moyeu et la paroi de boîtier correspondant, et est caractérisé en ce que le tube d'entretoisement est disposé radialement à l'intérieur des parois souples et s'étend dans un passage axial formé dans la partie de moyeu centrale.

D'autres caractéristiques et avantages de la présente invention ressortiront de la description suivante de modes de réalisation, donnés à titre illustratif mais nullement limitatif, faite en relation avec les dessins annexés, sur lesquels :

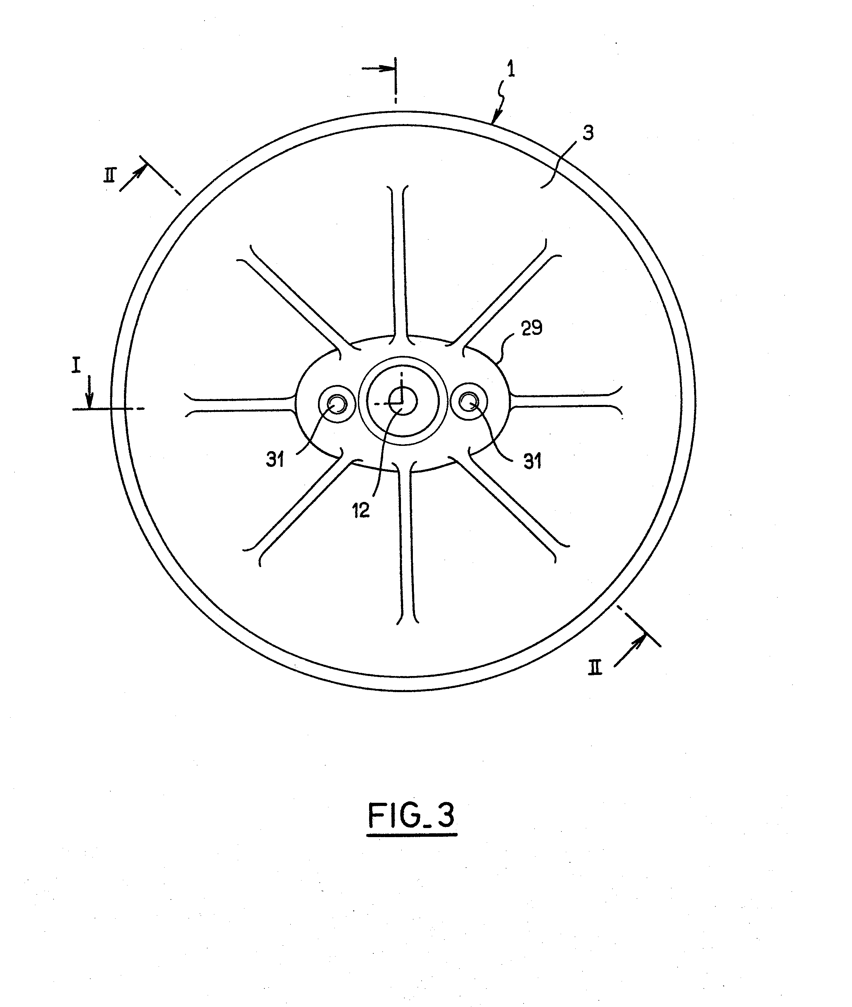

    - la figure 1 est une vue en coupe transversale d'un servomoteur selon l'invention, suivant la ligne 1-1 de la figure 3. ;

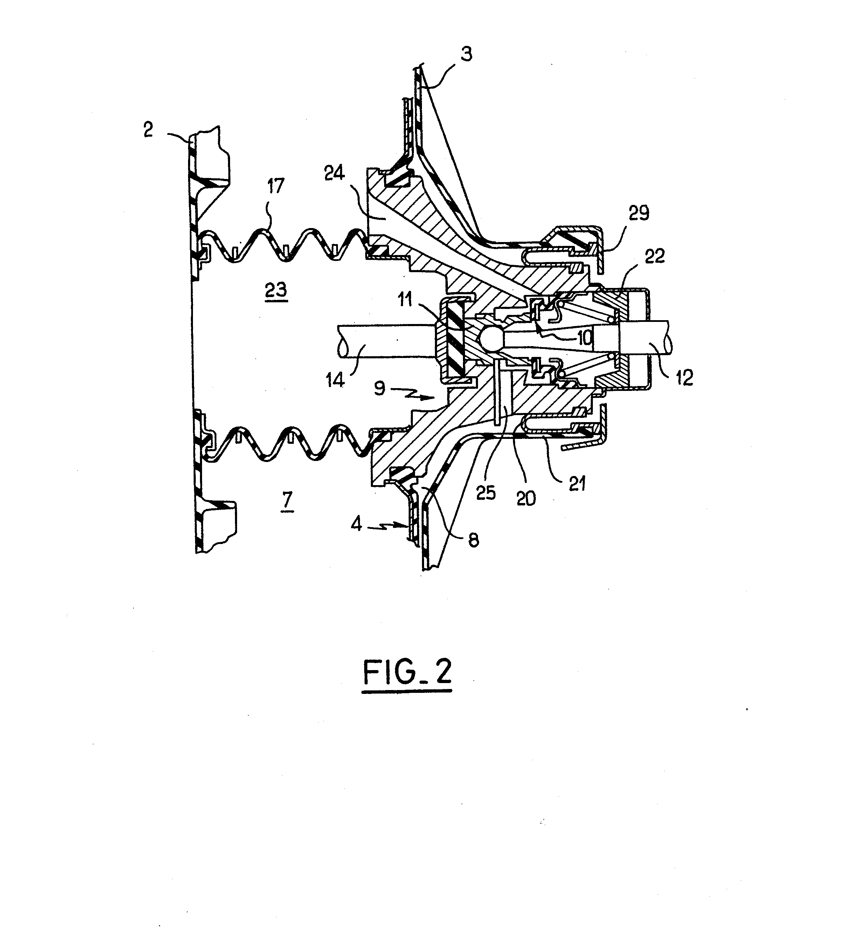

    - la figure 2 est une vue transversale partielle suivant la ligne 2-2 de la figure 3 ;

    - la figure 3 est une vue en bout du côté intérieur du servomoteur de la figure 1 ;

    - la figure 4 est une vue partielle extraite de la figure 1 montrant une variante du procédé de montage selon l'invention.

Dans la description qui va suivre, les expressions telles que "avant" ou "arrière" se réfèrent à l'orientation générale de l'ensemble de freinage installé dans un véhicule en respectant les notions correspondantes d'orientation du véhicule.

Le servomoteur représenté sur les figures est du type général décrit dans la demande de brevet français N° 82-18184 sus-mentionnée, dont le contenu est supposé intégré ici pour référence. Ce servomoteur comprend ainsi un boîtier 1, constitué par l'assemblage périphérique d'une coquille avant 2 et d'une coquille arrière 3, dans la cavité intérieure duquel est montée de façon à se déplacer une structure de paroi mobile 4 formant piston, constituée classiquement par une membrane déformable 5 renforcée par un plateau support annulaire 6 et divisant l'intérieur du boîtier 1 en une chambre avant 7 et une chambre arrière 8.

La structure de paroi mobile 4 est solidarisée intérieurement à une partie de moyeu centrale 9 dans laquelle est disposé le moyen de valve de commande à trois voies du servomoteur, dont le plongeur 11 est d'une part relié à l'organe ou tige de commande d'entrée 12 de l'ensemble (destiné à être relié à la pédale de frein du véhicule) et coopère, d'autre part, avec un disque de réaction 13 disposé dans une coupelle d'un organe ou tige de sortie 14 du servomoteur couplé au piston primaire du maître-cylindre 15 associé au servomoteur d'assistance et monté en porte-à-faux sur la face avant de ce dernier. La structure de paroi mobile 4 est normalement sollicitée vers la coquille arrière 3 du boîtier 1 par un ressort 16 disposé dans la chambre avant 7.

Dans le mode de réalisation représenté, la chambre avant 7 est délimitée intérieurement par une paroi souple étanche tubulaire, en l'espèce un soufflet 17 armé par des anneaux 18, s'étendant entre la partie de moyeu centrale 9 et le bord annulaire intérieur de la paroi frontale de la coquille avant 2 contre lequel il est maintenu par un anneau intérieur 19. De façon similaire, la chambre arrière 8 est délimitée intérieurement par une paroi souple étanche, en l'espèce une une membrane à roulement 20 , montée entre l'extrémité d'une partie central tubulaire 21 s'étendant axialement vers l'arrière de la coquille arrière 3 entourant l'extrémité arrière de diamètre réduit de la partie de moyeu centrale 9 et cette dernière, laquelle constitue un passage de communication, via un filtre 22, du moyen de valve 10 à l'atmosphère. De cette façon est ménagée,au centre du servomoteur, une zone neutre 23 ne participant pas au système d'échange pneumatique du servomoteur, le moyen de valve 10 communiquant respectivement avec la chambre avant 7 et la chambre arrière 8 par des canaux 24 et 25, formés dans la partie de moyeu centrale 9, débouchant dans les chambres respectives radialement à l'extérieur des parois souplesintérieures correspondantes 7 et 20, et décalés angulairement de passages axiaux 26 formés dans la partie avant de diamètre élargi de la partie de moyeu centrale 9 pour le passage d'éléments transmetteurs de force axiaux 30 assurant l'assemblage de l'ensemble de freinage et son montage sur la paroi fixe du véhicule et libérant les parois du boîtier 1 des forces de réaction apparaissant lors de l'actionnement de l'ensemble de freinage.

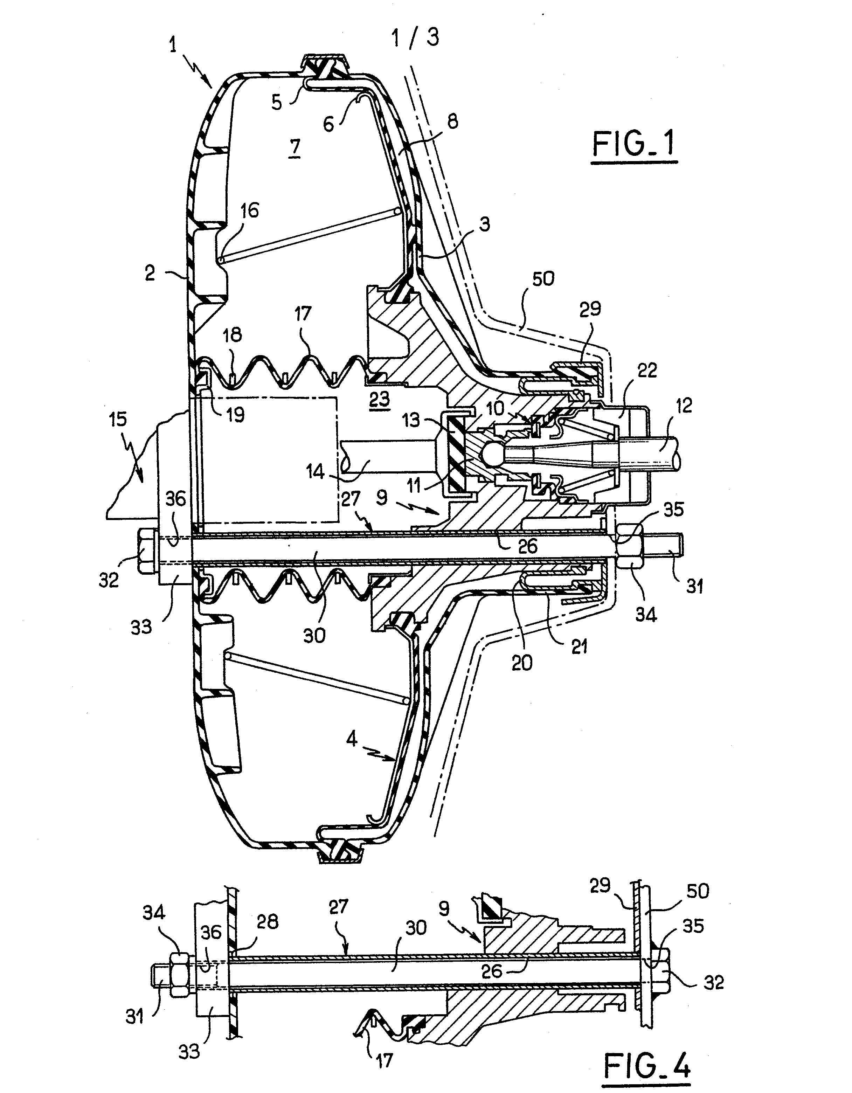

Conformément à un aspect de l'invention, comme on le voit sur les figures 1 et 4, au moins un tube stationnaire 27 (de préférence deux tubes diamétralement opposés) s'étend à coulissement libre sans étanchéité au travers du passage axial 26, dans la zone centrale neutre 23 entre les plans transversaux des extrémités axialement opposées, à ce niveau, des coquilles 2 et 3 du boîtier 1. De façon plus spécifique, le tube 27 comprend, à son extrémité avant, une petite collerette 28 reçue dans un chambrage correspondant de la zone d'extrémité centrale annulaire de la paroi frontale de la coquille avant 2, son autre extrémité étant solidarisée, par exemple sertie ou soudée, à un capuchon 29 monté sur l'extrémité arrière de la partie centrale tubulaire 21 de la coquille arrière 3, par exemple serti localement sur cette dernière, en occultant ainsi partiellement l'ouverture annulaire arrière par laquelle la zone centrale neutre 23 débouche à l'extérieur, vers l'arrière du boîtier. Selon un aspect de l'invention, chaque tube 27 constitue ainsi un moyen de guidage lors du montage et de logement in situ pour un tirant 30 comprenant une partie principale lisse s'étendant dans le tube 27 et se prolongeant à l'extérieur du boîtier du servomoteur par une première extrémité filetée 31 et une seconde extrémité formant tête de manoeuvre 32, de façon que le tirant ou boulon allongé 30 puisse traverser la collerette 33 d'accouplement du maître-cylindre 15, l'ensemble du boîtier et la paroi fixe 50 du véhicule (laquelle peut présenter, comme représenté, une zone en retrait abritant l'extrémité arrière du servomoteur) sur laquelle est monté en porte-à-faux l'ensemble servomoteur-maître-cylindre au moyen des tirants 30.

A cet effet, conformément à un aspect du procédé selon l'invention, représenté sur la figure 1, l'écrou 34 destiné à coopérer avec la première extrémité filetée 31 du tirant 30 faisant saillie au-delà de la paroi fixe 50, du côté de celle-ci opposé au servomoteur, c'est-à-dire côté habitacle, est préalablement soudé sur la face arrière de la paroi 50 en regard du trou 35 de traversée de la paroi 50 ; de cette façon, le montage (ou le démontage) de l'ensemble servomoteur maître cylindre peut s'effectuer intégralement du seul côté avant de la paroi 50, l'opérateur introduisant le boulon 30 dans le trou ad hoc 36 de la collerette 33 du maître cylindre 15, puis introduisant, le boulon 30 dans le tube 27 pour faire dépasser la première extrémité 31 hors du boîtier 1 du servomoteur, l'ensemble étant ainsi présenté de façon à permettre l'introduction de la première extrémité filetée 31 dans le trou 35 de la paroi 50, une rotation de la tête 32 permettant alors le vissage du boulon 30 dans l'écrou 34 pour le montage en porte-à-faux de l'ensemble de freinage sur la paroi fixe 50, le tube 27 assurant, comme sus mentionné, la réaction de l'effort de serrage et évitant toute déformation axiale du boîtier 1.

Inversement, dans la seconde variante du procédé de l'invention illustrée sur la figure 4, le boulon 30 est préalablement introduit au travers du trou 35 de la paroi fixe 50 depuis l'intérieur de l'habitacle de façon à s'étendre dans le compartiment moteur, le boulon étant solidarisé, typiquement soudé, par sa tête 32 contre la face arrière de la paroi 50. Le processus de montage de l'ensemble est alors le suivant : on engage le boulon 30, ainsi fixé, dans le tube 27 pour amener le boîtier/en butée contre la face avant de la
                                   du servomoteur
paroi 50, de façon que la première extrémité filetée 31 du boulon 30 fasse saillie vers l'avant au-delà de la face frontale de la coquille avant 2, après quoi on présente le maître-cylindre 15 pour engager l'extrémité filetée 31 du boulon 30 au travers du trou 36 de la collerette 33, puis on visse l'écrou 34 sur l'extrémité filetée 31 pour assurer un serrage convenable, toutes ces opérations s'effectuant, conformément à l'invention, du même côté (avant) de la paroi fixe 50 sans nécessité d'accéder au côté arrière de cette paroi 50.

Comme sus mentionné, le procédé selon l'invention s'applique indifféremment aux structures mettant en oeuvre des tirants sensiblement rectilignes disposés à l'extérieur du boîtier, au niveau d'une partie rentrante de celui-ci, auquel cas on prévoiera la connexion du tube 27 sur une des coquilles du boîtier - s'étendant, également au niveau d'une zone rentrante du boîtier, au travers de l'épaisseur du boîtier, ou s'étendant au travers des chambres du boîtier et de la structure de paroi mobile, auquel cas on prévoiera des moyens d'étanchéification des extrémités du tube 27 par rapport aux parois frontales correspondantes des coquilles du boîtier, ainsi qu'un organe d'étanchéité, par exemple coulissant, à membrane roulante ou à soufflet, entre l'ouverture de traversée de la structure de paroi mobile 4 et le tube 27.

Quoique la présente invention ait été décrite en relation avec des modes de réalisation particuliers, elle ne s'en trouve pas limitée mais est au contraire susceptible de modifications et de variantes qui apparaîtront à l'homme de l'art. En particulier, quoique décrite en relation avec un servomoteur simple, la présente invention s'applique également à un servomoteur du type tandem.

7 0119880

REVENDICATIONS

1. Procédé de montage d'un ensemble d'un servomoteur d'assistance au freinage et d'un maître-cylindre (15) sur une face d'une paroi fixe (50) d'un véhicule, le servomoteur comprenant un boîtier (1) divisé intérieurement par une structure de paroi mobile (4) en une première (7) et une seconde (8) chambres, au moins un élément transmetteur de force sensiblement rectiligne (30) s'étendant axialement dans une zone intérieure au profil général circonscrit du boîtier (1) et présentant une première (31) et une seconde (32) extrémités faisant respectivement saillie axialement de part et d'autre du boîtier, au moins la première extrémité (31) étant destinée à coopérer avec un organe de fixation complémentaire (34) pour l'assemblage de l'ensemble et son montage sur la paroi fixe (50), caractérisé en ce qu'il comprend les étapes de solidariser préalablement l'organe de fixation complémentaire (34) ou la seconde extrémité (32) de l'élément transmetteur de force (30) sur l'autre face de la paroi fixe (50), d'assembler l'ensemble et de le fixer en place par manoeuvre de la seconde extrémité (32) de l'élément transmetteur de force (30) ou de l'organe de fixation complémentaire (34), respectivement, du côté du servomoteur opposé à la paroi fixe (50)

2. Procédé selon la revendication 1, caractérisé en ce que l'élément transmetteur de force (30) se présente sous la forme d'un boulon allongé dont la seconde extrémité (32) constitue une tête de manoeuvre, l'organe de fixation complémentaire (34) étant un écrou.

3. Servomoteur d'assistance au freinage pour la mise en oeuvre du procédé selon la revendication 1 ou la revendication 2, caractérisé en ce qu'il comprend en outre un moyen d'entretoisement tubulaire (27) disposé dans ladite zone intérieure du boîtier (1), connecté à ce boîtier et de même extension axiale que ce dernier, et formant moyen de guidage et de logement pour l'élément transmetteur de force (30).

4. Servomoteur selon la revendication 3, caractérisé en ce que le moyen d'entretoisement est un tube (30) traversant intérieurement le boîtier (1).

5. Servomoteur selon la revendication 4, comprenant en outre une partie de moyeu centrale (9) solidaire en déplacement de la structure de paroi mobile (4) et dans laquelle est disposé un moyen de valve de commande (10) actionné par un organe d'entrée (12), chaque chambre (7, 8) du boîtier étant délimitée intérieurement par une paroi souple (17, 20) s'étendant entre la partie de moyeu centrale (9) et la paroi du boîtier correspondante (2, 3), caractérisée en ce que le tube (27) est disposé radialement à l'intérieur des parois souples (17, 20) et s'étend dans un passage axial (26) formé dans la partie de moyeu centrale (9).

6. Servomoteur selon la revendication 5, caractérisé en ce que la paroi arrière (3) du boîtier (1) comprend une partie centrale tubulaire (21) s'étendant axialement vers l'extérieur autour de l'extrémité extérieure de diamètre réduit de la partie de moyeu centrale (9), et en ce qu'une extrémité du tube (27) est solidarisée à un capuchon (29) monté sur l'extrémité de la partie centrale tubulaire (21) de la paroi arrière (3) du boîtier.

FIG. 1

FIG. 4

FIG_2

FIG_3

# 0119880

Office européen
des brevets

**RAPPORT DE RECHERCHE EUROPEENNE**

Numéro de la demande

EP 84 40 0263

## DOCUMENTS CONSIDERES COMME PERTINENTS

| Catégorie | Citation du document avec indication, en cas de besoin, des parties pertinentes | Revendication concernée | CLASSEMENT DE LA DEMANDE (Int. Cl. 3) |
|---|---|---|---|
| A,D | GB-A-2 009 871 (GIRLING LTD.)<br>* Figures 1,3,8-16 * | 1 | B 60 T 13/24 |
| | --- | | |
| A,D | GB-A-2 070 171 (AISIN SEIKI K.K.) | | |
| | --- | | |
| A,D | GB-A-2 082 704 (ALFRED TEVES GmbH) | | |
| | --- | | |
| A,D | EP-A-0 052 472 (AUTOMOTIVE PRODUCTS LTD.) | | |
| | --- | | |
| A | FR-A-2 439 113 (LUCAS INDUSTRIES LTD.) | | |
| | --- | | |
| A | FR-A-2 442 166 (LUCAS INDUSTRIES LTD.) | | |
| | ----- | | |

**DOMAINES TECHNIQUES RECHERCHES (Int. Cl. 3)**

B 60 T 13/00
F 15 B 15/00

Le présent rapport de recherche a été établi pour toutes les revendications

| Lieu de la recherche<br>LA HAYE | Date d'achèvement de la recherche<br>24-05-1984 | Examinateur<br>BRAEMS C.G.I. |
|---|---|---|

CATEGORIE DES DOCUMENTS CITES

X : particulièrement pertinent à lui seul
Y : particulièrement pertinent en combinaison avec un autre document de la même catégorie
A : arrière-plan technologique
O : divulgation non-écrite
P : document intercalaire

T : théorie ou principe à la base de l'invention
E : document de brevet antérieur, mais publié à la date de dépôt ou après cette date
D : cité dans la demande
L : cité pour d'autres raisons

 

& : membre de la même famille, document correspondant

OEB Form 1503. 03.82